# EUROPEAN PATENT SPECIFICATION

(11) **EP 0 594 329 B1**
(45) Date of publication and mention of the grant of the patent: **14.01.1998**
(21) Application number: 93307970.9
(22) Date of filing: 07.10.1993
(51) Int. Cl.: A01N 43/50

(54) **Antimicrobial agents comprising polyquaternary ammonium compounds**
Polyquaternäre Ammoniumverbindungen enthaltende antimikrobielle Mittel
Agents antimicrobiens comprenant des composés polymériques d'ammonium quaternaires

(30) Priority: 20.10.1992 GB 9221975
(43) Date of publication of application: 27.04.1994
(73) Proprietor: RHONE-POULENC CHEMICALS LIMITED, Watford, Herts WD1 1QM (GB)
(72) Inventor: Carr, John Frederick, Gloucester GL1 5NT (GB); Davis, Brian, Doncaster DN5 7QH (GB); Lees, Peter, Bradford (GB); Jordan, Peter, Leeds LS12 4XF (GB)
(74) Representative: Woods, Geoffrey Corlett

(56) References cited:
- CHEMICAL PATENTS INDEX, DOCUMENTATION ABSTRACTS JOURNAL Week 9244, Derwent Publications Ltd., London, GB; AN 92-360684/44 & JP-A-04 261 105 (SHIKOKU CHEM IND) 17 September 1992
- PATENT ABSTRACTS OF JAPAN vol. 8, no. 260 (C-254)(1697) 29 November 1984 & JP-A-59 138 228 (MITSUBISHI YUKA) 8 August 1984

## Description

This invention relates to antimicrobial agents and their use.

A variety of polyquaternary ammonium compounds have been described as possessing antimicrobial activity. For example, United States Patent No. 4111679 describes the use of polyquaternary ammonium compounds made by reaction of dimethylamine or diethylamine with epichlorohydrin for controlling microorganisms in industrial cooling water systems. United States Patent No. 4089977 describes the use of polymeric quaternary ammonium compounds made by reaction of 1,3-dichloro-2-propanol with an amine such as dimethylamine or 1,3-bis-dimethylamino-2-propanol. These polyquaternary ammonium compounds are stated to be antimicrobial agents. Some products of this kind are available commercially. For example one product (herein called Product A) apparently made by reaction of 1,3-bis-dimethylamino-2-propanol with ethylene dichloride is sold as a broad spectrum microbiocide stated to be effective against algae, bacteria and fungi. A second product (herein called Product B) made by reacting β,β'-(bis-dimethylamino)ethylether with ethylene dichloride is sold for a similar purpose. A third commercially available product (herein called Product C), is made by reaction of epichlorohydrin with dimethylamine. This product is sold as a microbial control agent for cooling water and swimming pools.

Japanese Patent Publication No. 138228/84 of Mitsubishi Yuka Corp. describes certain polyquaternary ammonium compounds made by reaction of a imidazole with an epihalohydrin. These compounds are stated to have a variety of uses, for example, as reforming agents for synthetic resins, weave material post treatment agents, paper treatment agents, coagulants, antistatic agents, soaps, cosmetics, assisting agents for shampoos etc., antiseptics, sterilising agents, and drugs having cholesterol reducing activity. The published specification says that these quaternary ammonium compounds have improved heat resistance.

It has now surprisingly been discovered that polyquaternary ammonium compounds of the kind disclosed in the aforesaid Japanese specification are very effective antimicrobial agents, and, in particular, are much more effective than superficially similar polyquaternary ammonium compounds of the prior art, especially against bacteria and fungi.

The present invention accordingly provides use, as an antimicrobial agent in water treatment and storage, in air conditioners, in swimming pools, in spa baths and jacuzzis, in ornamental fountains, in cooling water and cooling towers, in heat exchangers, in industrial process water, and in water used in paper making and in printing inks, metal working fluids and ceramic slurries, of a polyquaternary ammonium compound of the formula: 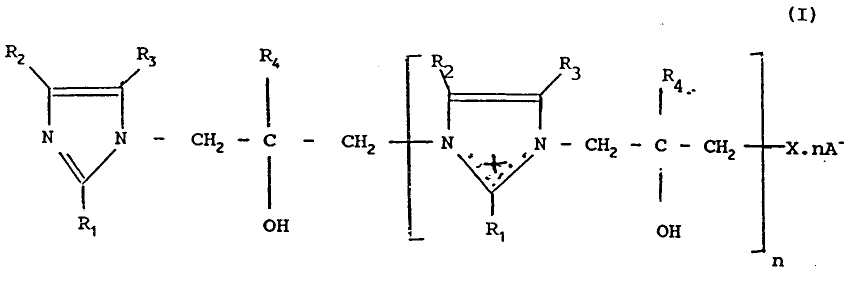 where R₁ is hydrogen, alkyl, or aryl, especially hydrogen, alkyl of 1 to 4 carbon atoms or phenyl, each of R₂ and R₃ is hydrogen or alkyl of 1 to 4 carbon atoms, especially hydrogen, methyl or ethyl, R₄ is hydrogen or methyl, X is hydroxyl or halogen, especially chlorine or bromine, A⁻ is an anion, which may be inorganic, e.g. chloride or bromide, or organic, e.g. acetate or benzoate, and n is an integer, e.g. from 10 to 100.

The aforesaid polyquaternary ammonium compounds may be made by reaction of an imidazole of formula: 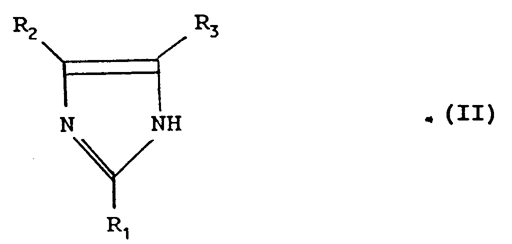 where R₁, R₂ and R₃ are as hereinbefore defined, with a compound of formula: 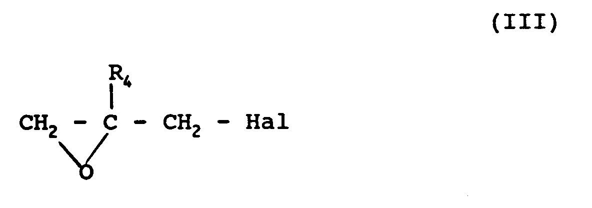 where Hal is halogen and R₄ is hydrogen or methyl.

Thus, for example, imidazole may be reacted with epichlorohydrin in aqueous medium at a temperature in the range of 50 to 100°C in essentially stoichiometric quantities until the reaction is complete and neither starting material is present in significant amounts in the reaction medium. This normally takes one to five hours. The aqueous reaction mixture is then cooled and concentrated as necessary to produce a aqueous solution of the polyquaternary ammonium compound which may be used as such for the purposes of the present invention.

The polyquaternary ammonium compounds of formula I are normally used in aqueous medium, usually in a concentration in the range 2 to 200 ppm. The optimum concentration depends upon the microorganism which it is particularly desired to control. For example, to control bacteria within 24 hours exposure, the concentration may be in the range 10 to 30 ppm. This is very significantly lower than the concentration of polyquaternary ammonium compounds previously used for this purpose. The same concentration is effective also against fungi and algae, but if algae alone are to be controlled, the effective concentration is somewhat lower, e.g. 2 to 10 ppm.

The polyquaternary ammonium compounds of formula I may be used in the control of microorganisms in a wide variety of industrial and domestic environments, for example, in water treatment and storage, in air conditioners, in swimming pools, in spa baths and jacuzzis, in ornamental fountains, in cooling water and cooling towers, in heat exchangers, in industrial process water, and in water used in paper making. The polyquaternary ammonium compounds may also be used to protect any industrial product which contains water and may sustain microbial growth, e.g. printing inks, metal working fluids and ceramic slurries. The polyquaternary ammonium compound must, of course, be compatible with the other ingredients of the formulation and its physical form, whether a solution, emulsion or dispersion.

For industrial use the polyquaternary ammonium compound of formula I as defined above may be supplied in the form of a concentrated aqueous solution containing, for example, from 0.1% to 60% by weight, especially from 20% to 60% by weight, of solids.

The following Example describes the preparation of a preferred polyquaternary ammonium compound for use in the present invention.

### EXAMPLE

Water (655 kg) and imidazole (290 kg) were mixed in a suitable non-corrodible vessel. The mixture was stirred and heated to 65°C. The vessel was then closed and epichlorohydrin (420 kg) was then added slowly over 2 to 3 hours while the reaction mixture was maintained at a temperature of 70 to 80°C using water cooling as necessary. When the addition of the epichlorohydrin was complete, the mixture was heated to 90 to 95°C for two hours. The mixture was then checked to ensure that no significant amount of either starting material remained. Minor additions of any deficient starting material are made at this stage if necessary. When the reaction is complete, the reaction mixture is cooled to 40°C and filtered. The solution obtained is then ready for use.

The surprising efficacy of the polyquaternary ammonium compounds of formula I, as compared with currently used polyquaternary ammonium compounds in the control of microbial growth, has been demonstrated by the following tests:

### Activity against fungi

When tested against Fusarium solani, the minimum inhibitory concentration of the product produced in accordance with the above Example was 17ppm. For the known polyquaternary ammonium compounds Products A, B and C, the corresponding figure was 33 ppm. Thus the product of the present invention is twice as effective against fungi as the prior art polyquaternary ammonium compounds. [The minimum inhibitory concentration of a product is that concentration of the product in distilled water which just prevents growth of the microorganism in an appropriate culture medium without however necessarily killing the microorganism.]

### Activity against bacteria

The bactericidal concentration is the concentration of the polyquaternary ammonium compound under test which in hard water at a concentration of 200 ppm gives a 99.99% kill of the test bacteria in the presence of 5% horse serum in the stated contact time.

The product as described in the above Example was compared with the known Products A, B and C in this test with the results given in the Table below. The effectiveness of the product of the invention after only 4 hours contact is particularly notable.

In a further series of tests, the polyquaternary ammonium compound of the Example has been compared with the known polyquaternary ammonium compound Product C for activity against Legionella pneumophilia over a 24 hour period. This microorganism is particularly important in water cooling systems. With Product C at a concentration of 1000 ppm the number of viable colony units per ml did not fall over a 24 hour period, but remained at 2.8 X 10⁸. With the product of the present invention described in the Example above, at a concentration of only 12.5 ppm, the number of viable colony units per ml fell from an initial value of 10⁸ to 10⁴ after 24 hours. The polyquaternary ammonium compound of the present invention is thus far more effective than the known polyquaternary ammonium compound against Legionella pneumophilia.

| | | | | | |
|---|---|---|---|---|---|
| Contact Time (hours) | 72 | 72 | 24 | 4 | 1 |
| Bacteria | Escherichia Coli | Pseudomonas aeruginosa | Pseudomonas aeruginosa | Pseudomonas aeruginosa | Pseudomonas aeruginosa |
| Product C | 33 ppm | 33 ppm | 500-1000ppm | > 1000 ppm | > 1000 ppm |
| Product B | 33 ppm | 33 ppm | 500-1000ppm | > 1000 ppm | > 1000 ppm |
| Product A | 33 ppm | 33 ppm | 500-1000ppm | > 1000 ppm | > 1000 ppm |
| Polyquaternary ammonium compound of Ex.I | 17 ppm | 17 ppm | 20 ppm | 60 ppm | > 1000 ppm |

## Claims

1. Use, as an antimicrobial agent in water treatment and storage, in air conditioners, in swimming pools, in spa baths and jacuzzis, in ornamental fountains, in cooling water and cooling towers, in heat exchangers, in industrial process water, and in water used in paper making and in printing inks, metal working fluids and ceramic slurries, of a polyquaternary ammonium compound of the formula: 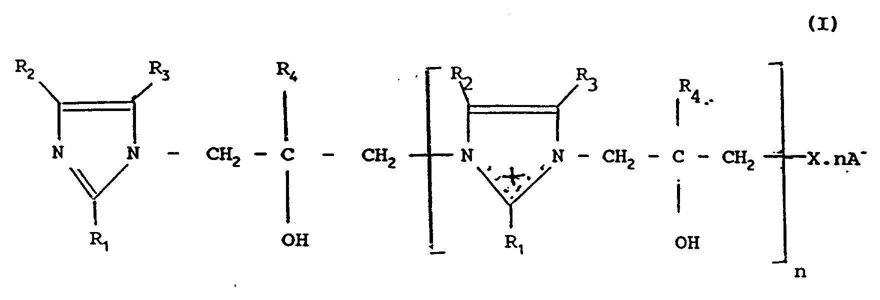 Where R₁ is hydrogen, alkyl, or aryl, each of R₂ and R₃ is hydrogen or alkyl of 1 to 4 carbon atoms, R₄ is hydrogen or methyl, X is hydroxyl or halogen, and n is an integer.

2. Use according to claim 1 in which, in the said polyquaternary ammonium compound, R₁, R₂, R₃ and R₄ are all hydrogen, X is chlorine and A is a chloride, acetate or benzoate anion.

3. Use according to claim 1 or 2 in which one or more of Fusarium solani, Escherichia coli, Pseudomonas aeruginosa and Legionella pnemophilia are contact with the said polyquaternary ammounium compound.

4. Use according to any one of claims 1 to 3 in which the said polyquaternary ammonium compound is used in an aqueous medium in a concentration from 2 to 200 parts per million.

5. Use according to any one of claims 1 to 4 which is carried out for a period of at least one hour.

## Patentansprüche

1. Verwendung einer polyquaternären Ammoniumverbindung der Formel: 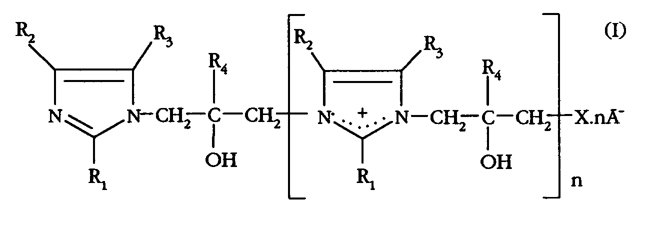 in der R₁ Wasserstoff, Alkyl oder Aryl ist, R₂ und R₃ jeweils Wasserstoff oder Alkyl mit 1 bis 4 Kohlenstoffatomen sind, R₄ Wasserstoff oder Methyl ist, X Hydroxyl oder Halogen und n eine ganze Zahl ist,
als antimikrobiellen Wirkstoff zur Behandlung und Lagerung von Wasser, in Klimaanlagen, Swimmingpools, Kurbädern und Jacuzzis, Zierbrunnen, Kühlwasser und Kühltürmen, in Wärmeaustauschern, industriellem Brauchwasser und im Wasser für die Papierherstellung und in Druckfarben, Metallbearbeitungsflüssigkeiten und Keramikschlämmen.

2. Verwendung nach Anspruch 1, wobei in der polyquaternären Ammoniumverbindung R₁, R₂, R₃ und R₄ alle Wasserstoff sind, X Chlor und A ein Chlorid-, Acetat- oder Benzoatanion ist.

3. Verwendung nach Anspruch 1 oder 2, wobei eines oder mehrere von Fusarium solani, Escherichia coli, Pseudomonas aeruginosa und Legionella pnemophilia mit der polyquaternären Ammoniumverbindung in Kontakt sind.

4. Verwendung nach einem der Ansprüche 1 bis 3, wobei die polyquaternäre Ammoniumverbindung in einem wäßrigen Medium in einer Konzentration von 2 bis 200 ppm eingesetzt ist.

5. Verwendung nach einem der Ansprüche 1 bis 4, die über einen Zeitraum von wenigstens einer Stunde durchgeführt wird.

## Revendications

1. Utilisation, comme agent antimicrobien dans le traitement et le stockage de l'eau, dans les systèmes de climatisation, dans les piscines, dans les bains de cure et les jacuzzis, dans les fontaines d'ornement, dans les eaux de refroidissement et les tours de refroidissement, dans les échangeurs de chaleur, dans l'eau de procédés industriels et dans l'eau utilisée en papeterie et dans les encres d'imprimerie, les fluides métallurgiques et les suspensions de céramique, d'un composé d'ammonium polyquaternaire de formule: 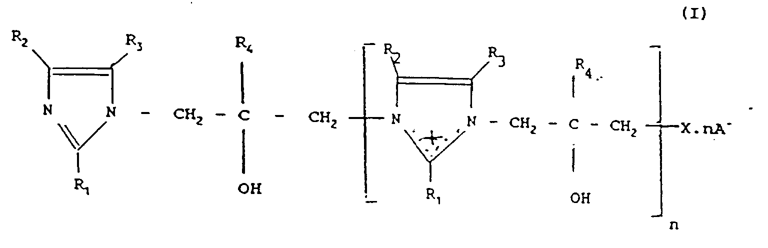 dans laquelle R₁ est un atome d'hydrogène, un groupe alkyle ou un groupe aryle, chacun des radicaux R₂ et R₃ est un atome d'hydrogène ou un groupe alkyle de 1 à 4 atomes de carbone, R₄ est un atome d'hydrogène ou un groupe méthyle, X est un groupe hydroxyle ou un atome d'halogène et n est un nombre entier.

2. Utilisation selon la revendication 1, dans laquelle, dans ledit composé d'ammonium polyquaternaire, R₁, R₂, R₃ et R₄ sont tous des atomes d'hydrogène, X est un atome de chlore et A est un anion chlorure, acétate ou benzoate.

3. Utilisation selon la revendication 1 ou 2, dans laquelle un ou plusieurs des micro-organismes Fusarium solani, Escherichia coli, Pseudomonas aeruginosa et Legionella pneumophilia sont mis en contact avec ledit composé d'ammonium polyquaternaire.

4. Utilisation selon l'une quelconque des revendications 1 à 3, dans laquelle ledit composé d'ammonium polyquaternaire est utilisé dans un milieu aqueux à une concentration de 2 à 200 parties par million.

5. Utilisation selon l'une quelconque des revendications 1 à 4, qui est mise en oeuvre pour une durée d'au moins une heure.
